# EUROPÄISCHE PATENTSCHRIFT

(11) **EP 2 230 704 B1**
(45) Veröffentlichungstag und Bekanntmachung des Hinweises auf die Patenterteilung: **23.11.2011**
(21) Anmeldenummer: 10004131.8
(22) Anmeldetag: 08.04.2008
(51) Int. Cl.: H01M 2/02, B32B 15/01

(54) **Knopfzelle mit beschichteter Außenseite**
Button cell with coated outer surface
Cellule bouton de surfaces exterieures revetues

(30) Priorität: 13.04.2007 DE 102007018259
(43) Veröffentlichungstag der Anmeldung: 22.09.2010
(62) Teilanmeldung aus: 08735083.1
(73) Patentinhaber: VARTA Microbattery GmbH, 73479 Ellwangen (DE)
(72) Erfinder: Schein, Herbert, 86754 Munningen (DE); Kreidler, Bernd, 73479 Ellwangen (DE); Pytlik, Eduard, 73479 Ellwangen (DE); Krebs, Martin, Dr., 73494 Rosenberg (DE); Ilic, Dejan, Dr., 73479 Ellwangen (DE)
(74) Vertreter: Patentanwälte Ruff, Wilhelm, Beier, Dauster & Partner

(56) Entgegenhaltungen:
- EP-A1- 1 458 037
- WO-A1-00/28612
- JP-A- 62 200 658
- US-A1- 2003 171 784
- US-A1- 2004 151 014
- N.J.DUDNEY: MATERIALS SCIENCE AND ENGINEERING B, Bd. 116, 2005, Seiten 245-249, XP002589530

## Beschreibung

Die vorliegende Erfindung betrifft eine Knopfzelle mit einem Gehäuse, umfassend einen Zellen becher, einen Zellendeckel und eine Dichtung, die den Zellenbecher und den Zellendeckel gegeneinander isoliert.

Knopfzellen weisen in der Regel einen Zellenbecher und einen Zellendeckel auf. Der Zellenbecher kann beispielsweise aus vernickeltem Tiefziehblech hergestellt werden. Gewöhnlich ist der Zellenbecher positiv und der Zellendeckel negativ gepolt. Derartige Knopfzellen können die verschiedensten elektrochemischen Systeme enthalten, beispielsweise Nickel/Cadmium, Nickel/Metallhydrid, Zink/Luft (MnO₂) oder auch primäre und sekundäre Lithium-Systeme.

Der flüssigkeitsdichte Verschluss solcher Zellen erfolgt in der Regel durch Umbördeln des Randes des Zellen bechers über den Zellendeckel. Ein zwischen Zellenbecher und Zellendeckel angeordneter Kunststoffring dient dabei üblicherweise als Dichtung und isoliert den Zellenbecher gegen den Zellendeckel. Derartige Knopfzellen sind beispielsweise aus der DE 31 13 309 bekannt.

Das oben erwähnte vernickelte Tiefziehblech ist häufig das Gehäusematerial der Wahl, da es billig ist und Nickel einen guten Korrosionsschutz bietet. Zudem bildet Nickel unter gewöhnlichen Bedingungen an seiner Oberfläche keine dicke Oxidschicht aus. Entsprechend gewährleistet eine Vernickelung in aller Regel einen dauerhaft guten elektrischen Kontakt zur den Stromabnahmeeinheiten eines Verbrauchers.

Die Herstellung von Zellen bechern und Zellendeckeln aus vernickeltem Tiefziehblech erfolgt vorzugsweise durch galvanisches Aufbringen einer Nickelschicht auf entsprechend geformte Metallteile. Alternativ können Zellenbecher und Zellendeckel auch direkt als Stanzziehteile aus vernickeltem Tiefziehblech hergestellt werden. In beiden Fällen weist die Nickelschicht üblicherweise eine gewisse Porosität auf. Dies stellt gewöhnlich kein Problem dar, allerdings kann es unter Extrembedingungen (z.B. bei hohen Temperaturen und hoher Luftfeuchtigkeit, wie sie beispielsweise in tropischen Gegenden auftreten) zu Rostausblühungen an den Poren kommen, die zur Verschmutzung des Verbrauchers und zur Unbrauchbarkeit der Knopfzelle führen können.

Besonders ausgeprägt und häufig tritt dieses Problem auch bei Knopfzellen auf, die in Hörgeräten eingesetzt werden. Im Ohr sorgen unvermeidliche Körperausdünstungen zusammen mit menschlicher Körperwärme für ein sehr aggressives Klima, so dass Hörgerät und Knopfzelle gleichermaßen ausgeprägten Korrosionsangriffen unterliegen.

Bei Knopfzellen ist im Hinblick auf Korrosionsangriffe insbesondere der Bereich der Bördelung sehr kritisch, weil in diesem Bereich der Abstand zwischen negativ und positiv gepolten Zellenteilen sehr gering ist und bei der Bördelung vorhandene Nickelschutzschichten beschädigt bzw. lokal aufgerissen werden können.

Aus der JP 62-200658 ist es bekannt, einen isolierenden Lack auf die Außenseite einer Knopfzelle aufzubringen.

Der vorliegenden Erfindung liegt die Aufgabe zugrunde, eine Lösung für die genannten Probleme zu finden, insbesondere eine Knopfzelle bereitzustellen, die sicher und zuverlässig in Hörgeräten verwendet werden kann, ohne diese zu verschmutzen oder selbst unbrauchbar zu werden.

Diese Aufgabe wird gelöst durch die Knopfzelle mit den Merkmalen des Anspruchs 1. Bevorzugte

Ausführungsformen der erfindungsgemäßen Knopfzelle und der erfindungsgemäßen Verwendung sind in den abhängigen Ansprüchen 2 bis 6 dargestellt.

Eine erfindungsgemäße Knopfzelle weist ein Gehäuse auf, das einen Zellenbecher, einen Zellendeckel und eine Dichtung umfasst. Die Dichtung isoliert den Zellenbecher gegen den Zellendeckel. Auf seiner Außenseite weist das Gehäuse einer erfindungsgemäßen Knopfzelle eine elektrisch nicht leitende Beschichtung auf.

Diese Beschichtung kann die erfindungsgemäße Knopfzelle wirksam vor korrosiven Angriffen schützen.

Die elektrisch nicht leitende Beschichtung umfasst zum einen Parylen. Bei Parylen handelt es sich bekanntlich um ein inertes, hydrophobes, optisch transparentes, polymeres Beschichtungsmaterial mit einem weiten industriellen Anwendungsspektrum. Parylen wird durch chemische Gasphasenabscheidung erzeugt. Das Ausgangsmaterial ist di-para-Xylylen oder ein halogeniertes Derivat davon. Dieses wird verdampft und durch eine Hochtemperaturzone geleitet. Dabei bildet sich ein hochreaktives Monomer, das auf der Oberfläche des zu beschichtenden Substrats in der Regel sofort zu einem kettenförmigen Polymer abreagiert. Zum Aushärten ist es hierbei lediglich erforderlich, das zu beschichtende Substrat auf einer nicht zu hohen Temperatur, beispielsweise Raumtemperatur, zu halten. Bevorzugt wird Parylen im Vakuum durch Kondensation aus der Gasphase als porenfreier und transparenter Polymerfilm auf ein Substrat aufgetragen. In einem Arbeitsgang können Beschichtungsdicken von 0,1 µm bis 50 µm aufgebracht werden.

Zum anderen umfasst die elektrisch nicht leitende Beschichtung ein Ventilmetalloxid (englisch: valve metal oxide). Als Ventilmetalle bezeichnet man bekanntlich Metalle bzw. Legierungen, deren Oxide dielektrische Eigenschaften aufweisen. Beispiele sind Al-, Ti-, Nb- und Ta-Oxide. Ventilmetalloxidschichten können prinzipiell als Gleichrichter eingesetzt werden, d. h. sie lassen einen Stromfluß nur in eine Richtung zu und wirken in der anderen Richtung hochisolierend, selbst bei sehr geringen Schichtdicken unterhalb von 100 nm. Diese Eigenschaft begründet die Bezeichnung "Ventilmetall". Gleichzeitig sind Ventilmetalloxidschichten bis zu einer bestimmten Dicke nahezu transparent, so dass sie als Topschichten auf einem glänzenden, gut reflektierenden Untergrund als Interferenzschichten fungieren können.

Geeignete Verfahren zur Herstellung von Ventilmetallbeschichtungen stellt die Dünnschichttechnik zur Verfügung, insbesondere die PVD-Technik. Innerhalb der PVD-Techniken ist das sogenannte Magnetron-Sputtern für die Schichterzeugung besonders prädestiniert. Die Oberflächenrauheit wird bei optimalen Beschichtungsparametern durch das Verfahren nicht negativ beeinträchtigt und die Schichtporosität ist für eine anschließende anodische Oxidation hinreichend gering.

Das dominierende Verfahren zur Erzeugung von Ventilmetalloxidschichten ist die anodische Oxidation von Ventilmetallbeschichtungen. Die Schichtdicke läßt sich durch die Anodisierspannung in hervorragender Weise steuern, sofern die Ventilmetallschicht geschlossen ist und die Elektrolytzusammensetzung sowie elektrische bzw. thermische Parameter bei der Anodisierung optimal gewählt sind. Die Einfärbung von Bulkmaterialien aus Ventilmetallen, z.B. Titanstäbe oder -drähte, ist Stand der Technik.

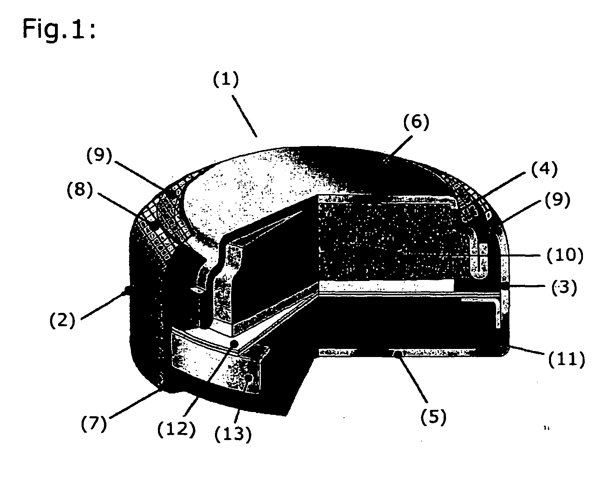

Das Gehäuse einer erfindungsgemäßen Knopfzelle ist vorzugsweise im wesentlichen zylindrisch ausgebildet. Zellenbecher und Zellendeckel einer erfindungsgemäßen Knopfzelle weisen vorzugsweise einen im wesentlichen ebenen Bodenbereich auf. Vorzugsweise bilden diese die Ober- und die Unterseite der Knopfzelle. Vorzugsweise werden in diesen Bereichen die Stromabnahmeeinheiten eines Verbrauchers angelegt. Bevorzugt weist das Gehäuse einer erfindungsgemäßen Knopfzelle einen vorzugsweise mantelartigen Abschnitt auf, der insbesondere zwischen den im wesentlichen ebenen Bodenbereichen ausgebildet ist. Dieser wird vorzugsweise von der Außenwand des Zellenbechers gebildet. Der Übergang von dem mantelartigen Abschnitt zu den ebenen Bodenbereichen kann insbesondere in Form einer Kante und/oder abgerundet ausgebildet sein. Dies ist in Fig. 1 anschaulich dargestellt. Zum im wesentlichen ebenen Boden des Zellendeckels hin ist der Übergang vorzugsweise abgerundet ausgebildet. Hier befindet sich in bevorzugten Ausführungsformen eine Bördelungszone, in der der Rand des Zellenbechers umgebogen ist und eng am Zellendeckel anliegt, vorzugsweise nur durch die Dichtung von ihm getrennt ist. Zwischen Zellenbecher und Zellendeckel besteht in diesem Bereich ein in der Regel nur sehr dünner Spalt, in dem die Dichtung angeordnet ist.

Eine erfindungsgemäße Knopfzelle weist in bevorzugten Ausführungsformen einen Durchmesser von < 25 mm, insbesondere < 15 mm, auf. Die Höhe einer erfindungsgemäßen Knopfzelle beträgt vorzugsweise weniger als 15 mm, insbesondere weniger als 10 mm.

In bevorzugten Ausführungsformen der erfindungsgemäßen Knopfzelle weist die Außenseite des Gehäuses einen oder mehrere unbeschichtete Teilbereiche auf. In diesen ist das Gehäuse frei von der elektrisch nicht leitenden Beschichtung.

Es kann insbesondere bevorzugt sein, dass die erfindungsgemäße Knopfzelle einen Zellendeckel mit im wesentlichen ebenem Boden und/ oder einen Zellendeckel mit im wesentlichen ebenem Boden aufweist, wobei der im wesentlichen ebene Bereich des Deckelbodens und/oder des Becherbodens mindestens teilweise unbeschichtet ist.

In bevorzugten Ausführungsformen weist eine erfindungsgemäße Knopfzelle einen mantelartigen Gehäuseabschnitt auf, der mindestens teilweise mit der elektrisch nicht leitenden Beschichtung (2) versehen ist. Insbesondere ist die Beschichtung dort in Form mindestens eines umlaufenden Streifens aufgebracht.

In weiteren bevorzugten Ausführungsformen einer erfindungsgemäßen Knopfzelle, weist diese einen Bördelungsbereich auf, der durch die elektrisch nicht leitende Beschichtung abgedeckt ist. Vorzugsweise deckt die elektrisch nicht leitende Beschichtung den Bereich des Becherrandes vollständig ab. Es kann insbesondere bevorzugt sein, dass die Beschichtung den oben erwähnten Spalt zwischen Zellendeckel und Zellenbecher in diesem Bereich abdeckt, gegebenenfalls teilweise ausfüllt.

Wie eingangs bereits erwähnt, kann beim Umbördeln eine gegebenenfalls vorhandene Nickelschicht aufreißen. Der aufgerissene Bereich bietet dann eine besondere gute Angriffsfläche für korrosive Medien. Durch Aufbringen der elektrisch nicht leitenden Beschichtung in diesem Bereich kann dem vorgebeugt bzw. entgegengewirkt werden. Darüber hinaus kann eine im Bördelungsbereich aufgebrachte elektrisch nicht leitende Beschichtung auch eine abdichtende Wirkung haben.

Einige erfindungsgemäß geeignete Beschichtungen lassen sich aus der Gasphase abscheiden. So handelt es sich bei den oben erwähnten Beschichtungen aus Parylen um CVD-Schichten. Über ein CVD-Verfahren lassen sich u.a. auch Schichten mit keramischen Bestandteilen, beispielsweise Aluminiumoxid, abscheiden. Insbesondere Beschichtungen aus einer Übergangsmetaliverbindung, vorzugsweise aus einem Übergangsmetallnitrid, insbesondere aus Titannitrid, können sehr gut über ein CVD-Verfahren abgeschieden werden.

Sowohl bei den CVD- als auch bei den PVD-Beschichtungen kann es sich erfindungsgemäß auch um Multilayer-Beschichtungen handeln, also mehrlagigen Beschichtungen.

Die elektrisch nicht leitende Beschichtung weist vorzugsweise eine Dicke zwischen 1 µm und 200 µm, insbesondere zwischen 1 µm und 100 µm, besonders bevorzugt zwischen 5 µm und 15 µm, auf.

Der Zellendeckel und/oder der Zellenbecher einer erfindungsgemäßen Knopfzelle bestehen vorzugsweise aus mindestens einem Metall und/oder mindestens einer Metalliegierung. Geeignete metallische Materialien sind dem Fachmann bekannt. Beispielhaft sei der eingangs bereits erwähnte Zellendeckel bzw. Zellenbecher aus vernickeltem Tiefziehblech erwähnt, bei denen die Nickelschicht die Außenseite des Gehäuses bildet. Besonders geeignet sind auch Zellenbecher und/oder Zellendeckel aus Trimetall. So sind Zellengehäuse aus Stahlblech mit einer außenliegenden Schicht aus Nickel und einer innenliegenden Schicht aus Kupfer besonders gegen die in einem galvanischen Element auftretenden elektrochemischen Belastungen geschützt und gewährleisten gleichzeitig auf der Außenseite eine gute Auflage für die erfindungsgemäß vorgesehene Beschichtung.

Die Dichtung einer erfindungsgemäßen Knopfzelle ist in besonders bevorzugten Ausführungsformen eine Foliendichtung. Geeignete Foliendichtungen sind beispielsweise in der DE 196 47 593 beschrieben.

Natürlich ist es auch möglich, dass es sich bei der Dichtung einer erfindungsgemäßen Knopfzelle um eine Spritzgussdichtung handelt. Spritzgussdichtungen für Knopfzellen sind bereits seit vielen Jahren bekannt und benötigen keiner näheren Erörterung.

Weiterhin ist es möglich, dass es sich bei der Dichtung um einen dünnen Polymerfilm handelt, der durch Aufbringen und anschließendes Aushärten eines Polymervorläufers gebildet wurde. Der Begriff Polymervorläufer meint dabei alle ein- und mehrkomponentigen Systeme, aus denen Verbindungen mit polymerer Struktur herstellbar sind. Der mindestens eine Polymervorläufer kann sowohl reaktive Einzelmonomere als auch vorvernetzte Monomerkomponenten aufweisen. Vorzugsweise wird der mindestens eine Polymervorläufer in flüssiger Form, beispielsweise als Lack, auf das mindestens eine Gehäuseteil aufgebracht, auch Abscheidungen aus der Gasphase sind aber möglich. Besonders bevorzugt handelt es sich bei dem mindestens einen Polymervorläufer um einen Parylenvorläufer oder einen Ormocervorläufer. Geeignete Ormocervorläufer sind beispielsweise in der DE 100 16 324 beschrieben.

Einer erfindungsgemäße Knopfzelle weist in aller Regel eine Anode, eine Kathode, einen Separator und eine Elektrolyten auf.

Grundsätzlich kann eine erfindungsgemäße Knopfzelle elektrochemische Systeme verschiedenster Art enthalten. Einige davon wurden bereits eingangs erwähnt. Handelt es sich bei der erfindungsgemäßen Knopfzelle um eine Primärbatterie, so weist sie besonders bevorzugt das elektrochemische System Zink/ MnO₂ auf.

Handelt es sich bei der erfindungsgemäßen Knopfzelle um eine Sekundärbatterie, so sind Nickel/Metallhydrid-Systeme oder auch Systeme mit einer Lithium interkalierenden Elektrode besonders bevorzugt.

Besonders bevorzugt handelt es sich bei der erfindungsgemäßen Knopfzelle um eine Knopfzelle für Hörgeräte, insbesondere um eine wiederaufladbare Knopfzelle für Hörgeräte.

Zellenbecher und Zellendeckel einer erfindungsgemäßen Knopfzelle weisen vorzugsweise eine Wandstärke zwischen 0,08 mm und 0,2 mm, insbesondere zwischen 0,1 mm und 0,15 mm auf (ohne Beschichtung).

Als Elektrolyt kommt in einer erfindungsgemäßen Knopfzelle insbesondere ein alkalischer Elektrolyt zum Einsatz. Geeignete Elektrolyten sind dem Fachmann bekannt.

Handelt es sich bei der erfindungsgemäßen Knopfzelle um eine Sekundärbatterie, so sind Nickel/Metallhydrid-Systeme oder auch Systeme mit einer Lithium interkalierenden Elektrode besonders bevorzugt.

Besonders bevorzugt handelt es sich bei der erfindungsgemäßen Knopfzelle um eine Knopfzelle für Hörgeräte, insbesondere um eine wiederaufladbare Knopfzelle für Hörgeräte.

Zellenbecher und Zellendeckel einer erfindungsgemäßen Knopfzelle weisen vorzugsweise eine Wandstärke zwischen 0,08 mm und 0,2 mm, insbesondere zwischen 0,1 mm und 0,15 mm auf (ohne Beschichtung).

Als Elektrolyt kommt in einer erfindungsgemäßen Knopfzelle insbesondere ein alkalischer Elektrolyt zum Einsatz. Geeignete Elektrolyten sind dem Fachmann bekannt.

Durch die Beschichtung der Außenseite des Gehäuses wurde erreicht, dass die erfindungsgemäße Knopfzelle eine außerordentlich hohe Stabilität gegenüber korrosiven Angriffen aufweist. Insbesondere auch in Hörgeräten lassen sich erfindungsgemäße Knopfzellen über lange Zeiträume einsetzen, ohne dass es zu den eingangs erwähnten Rostausblühungen kommt.

Zur Herstellung einer erfindungsgemäßen Knopfzelle wird auf die Außenseite des Knopfzellengehäuses einer Knopfzelle, insbesondere auf den Zellenbecher und/oder den Zellendeckel, vor oder nach deren Zusammenbau die elektrisch nicht leitende Beschichtung aufgebracht. Das Aufbringen erfolgt vorzugsweise im Mantelbereich des Zellenbechers, also in dem Bereich, der auch den Mantel der zusammengesetzten Knopfzelle bildet.

Gemäß dem erfindungsgemäßen Verfahren werden als elektrisch nicht leitendes Beschichtungsmaterial ein Ventilmetall und Parylen aufgebracht.

Zum Aufbringen eines Ventilmetalloxids auf die Außenseite des Knopfzellengehäuses wird vorzugsweise in einem ersten Schritt mindestens ein Ventimetall, insbesondere aus der Gruppe mit Aluminium, Tantal, Niob, Mangan, Titan, Bismut, Antimon, Zink, Cadmium, Zirconium, Wolfram, Zinn, Eisen, Silber und Silizium aufgebracht. In einem zweiten Schritt wird dann das auf die Außenseite des Knopfzellengehäuses aufgebrachte Ventimetall oxidiert, insbesondere durch anodische Oxidation. Mit besonderem Vorteil lässt sicht mit der Spannung bei der anodischen Oxidation auch die Farbe der Ventilmetalloxidbeschichtung einstellen. Die Ventilmetalloxidschicht ist sehr hart und elektrisch nicht leitend. Das hat den zusätzlichen Vorteil, daß man zudem eine Verbesserung in der Kratzfestigkeit und Korrosionsschutz erreicht.

Das Aufbringen des mindestens einen Ventimetalls erfolgt bevorzugt über ein PVD-Verfahren, insbesondere durch Magnetron-Sputtern.

Die genannten und weitere Vorteile der Erfindung ergeben sich aus der Beschreibung der nun folgenden Beispiele und der Zeichnung in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

Fig. 1 zeigt eine Ausführungsform einer erfindungsgemäßen Knopfzelle **1,** deren Außenseite eine elektrisch nicht leitende Beschichtung **2** aufweist (wobei die Beschichtung **2** lediglich als Schraffierung dargestellt ist). Die Knopfzelle **1** ist teilweise im Querschnitt dargestellt. Das Gehäuse der Knopfzelle ist im wesentlichen zylindrisch ausgebildet. Zellenbecher **3** und Zellendeckel **4** der Knopfzelle weisen einen im wesentlichen ebenen Bodenbereich auf (s. Becherboden **5** und Deckelboden **6**). Vorzugsweise werden in diesen Bereichen die Stromabnahmeeinheiten eines Verbrauchers angelegt. Das Gehäuse weist einen mantelartigen Abschnitt auf, wie er bereits im allgemeinen Beschreibungsteil erwähnt wurde. Der mantelartige Abschnitt wird von der Außenwand des Zellenbechers **3** gebildet. Dieser ist im wesentlichen vollständig von der elektrisch nicht leitenden Beschichtung **2** bedeckt. Der Übergang vom mantelartigen Abschnitt zum Becherboden **5** ist in Form einer leicht abgerundeten Kante **7** ausgebildet. Nach oben hin erstreckt sich der mantelartige Abschnitt bis zu dem Punkt, ab der der Rand **8** des Zellenbechers **3** nach innen gewölbt ist, um ein enges Anliegen am Zellendeckel **4** zu gewährleisten. Hier befindet sich die Bördelungszone der Knopfzelle. Eine Dichtung **9** trennt den Zellenbecher **3** vom Zellendeckel **4.** Weiterhin sind die Anode **10,** die Kathode **11** und der Separator **12** dargestellt. Mit **13** ist ein ringförmiges Stützelement bezeichnet.

Der Bereich der Außenseite, der mit der Beschichtung **2** versehen ist, ist in Fig.1 (wie bereits erwähnt) lediglich schraffiert dargestellt. Die Beschichtung **2** deckt den Gehäusemantel im wesentlichen vollständig ab, wohingegen der Becherboden **5** und der Deckelboden **6** nicht beschichtet sind. Ebenfalls von der Beschichtung **2** überdeckt wird die Bördelungszone. In diesem Bereich überdeckt die Beschichtung sowohl den umgebogenen Rand **8** des Zellenbechers **3** als auch den Spalt zwischen Zellenbecher **3** und Zellendeckel **4** und damit auch die Dichtung **9.**

## Patentansprüche

1. Knopfzelle (1) mit einem Gehäuse umfassend einen Zellenbecher (3), einen Zellendeckel (4) und eine Dichtung (9), die den Zellenbecher (3) und den Zellendeckel (4) gegeneinander isoliert, wobei das Gehäuse auf seiner Außenseite eine elektrisch nicht leitende Beschichtung (2) umfassend Parylen und ein Ventilmetalloxid aufweist.

2. Knopfzelle nach Anspruch 1, **dadurch gekennzeichnet, dass** die Außenseite des Gehäuses einen oder mehrere unbeschichtete Teilbereiche aufweist, in denen es im wesentlichen frei von der elektrisch nicht leitenden Beschichtung (2) ist.

3. Knopfzelle nach Anspruch 1 oder Anspruch 2, **dadurch gekennzeichnet, dass** sie einen mantelartigen Gehäuseabschnitt aufweist, der mindestens teilweise mit der elektrisch nicht leitenden Beschichtung (2) versehen ist.

4. Knopfzelle nach einem der vorhergehenden Ansprüche, **dadurch gekennzeichnet, dass** sie einen Bördelungsbereich aufweist, der durch die elektrisch nicht leitende Beschichtung (2) abgedeckt ist.

5. Knopfzelle nach einem der vorhergehenden Ansprüche, **dadurch gekennzeichnet, dass** die elektrisch nicht leitende Beschichtung (2) eine Dicke zwischen 1 µm und 200 µm aufweist.

6. Knopfzelle nach einem der vorhergehenden Ansprüche, **dadurch gekennzeichnet, dass** es sich bei der Knopfzelle um eine wiederaufladbare Knopfzelle handelt, insbesondere um eine NickelMetallhydrid-Knopfzelle oder eine Knopfzelle mit einer Lithium interkalierenden Elektrode.

## Claims

1. A button cell (1) having a housing comprising a cell cup (3), a cell cover (4) and a seal (9) which isolates the cell cup (3) and the cell cover (4) from one another, wherein, on its exterior, the housing has an electrically non-conductive coating (2) comprising parylene and a valve metal oxide.

2. The button cell as claimed in claim 1, **characterized in that** the exterior of the housing has one or more uncoated subareas, in which it is essentially free of the electrically non-conductive coating (2).

3. The button cell as claimed in claim 1 or claim 2, **characterized in that** it has a casing-like housing section which is provided at least in places with the electrically non-conductive coating (2).

4. The button cell as claimed in any of the preceding claims, **characterized in that** the button cell has a flanged area, which is covered by the electrically non-conductive coating (2).

5. The button cell as claimed in any of the preceding claims, **characterized in that** the electrically non-conductive coating (2) has a thickness of between 1 µm and 200 µm.

6. The button cell as claimed in any of the preceding claims, **characterized in that** the button cell is a rechargeable button cell, in particular a nickel metal-hydride button cell or a button cell with a lithium-intercalating electrode.

## Revendications

1. Pile bouton (1), avec un boîtier comprenant un godet de pile (3), un couvercle de pile (4) et une garniture d'étanchéité (9), qui isole le godet de pile (3) et le couvercle de pile (4) l'un de l'autre, le boîtier présentant, sur son côté extérieur, un revêtement (2) non conducteur de l'électricité comprenant du parylène et un oxyde métallique à effet de soupape.

2. Pile bouton selon la revendication 1, **caractérisée en ce que** le côté extérieur du boîtier présente une ou plusieurs régions partielles non revêtues, dans lesquelles il est essentiellement exempt du revêtement (2) non conducteur de l'électricité.

3. Pile bouton selon la revendication 1 ou la revendication 2, **caractérisée en ce qu'**elle présente une portion de boîtier de type enveloppe qui est pourvue au moins en partie du revêtement (2) non conducteur de l'électricité.

4. Pile bouton selon l'une quelconque des revendications précédentes, **caractérisée en ce qu'**elle présente une région de bordure qui est recouverte par le revêtement (2) non conducteur de l'électricité.

5. Pile bouton selon l'une quelconque des revendications précédentes, **caractérisée en ce que** le revêtement (2) non conducteur de l'électricité présente une épaisseur comprise entre 1 µm et 200 µm.

6. Pile bouton selon l'une quelconque des revendications précédentes, **caractérisée en ce qu'**il s'agit d'une pile bouton rechargeable, notamment d'une pile bouton nickel-hydrure métallique ou d'une pile bouton avec une électrode intercalante au lithium.
